# FASCICULE DE BREVET EUROPEEN

(11) **EP 4 330 115 B1**
(45) Date de publication et mention de la délivrance du brevet: **09.07.2025**
(21) Numéro de dépôt: 22726116.1
(22) Date de dépôt: 28.04.2022
(51) Int. Cl.: B62D 21/10, B62D 21/16, B62D 29/04, B60K 16/00, B60R 19/20, B60K 1/04, B60K 7/00

(54) **VÉHICULE GONFLABLE PLIABLE**
ZUSAMMENKLAPPBARES AUFBLASBARES FAHRZEUG
FOLDING INFLATABLE VEHICLE

(30) Priorité: 29.04.2021 FR 2104460; 30.04.2021 FR 2104595
(43) Date de publication de la demande: 06.03.2024
(73) Titulaire: PAYARD, Benoit, 63160 Billom (FR)
(72) Inventeur: PAYARD, Benoit, 63160 Billom (FR)
(86) Numéro de dépôt international: PCT/EP2022/061416
(87) Numéro de publication internationale: WO 2022/229354

(56) Documents cités:
- CN-A- 102 795 269
- CN-Y- 201 193 080
- DE-A1- 102015 114 689
- DE-U1- 29 719 770
- FR-A- 1 509 071
- GB-A- 2 496 443
- US-A1- 2009 043 438

## Description

La présente invention a pour objet de créer un véhicule gonflable pliable, avec un habitacle, où seul les châssis support de roue et la roue ne sont pas gonflables. Lesdits châssis support de roue sont maintenus par la pression de gonflage de certaines parties du véhicule. Les moteurs et le stockage d'énergie sont au niveau des roues et du châssis support de roue. Les commandes sont amovibles, comme tourner, accélérer, freiner, feux et klaxon.

### Domaine technique

La présente invention concerne un véhicule gonflable pliable qui est le plus léger possible et qui prend le minimum de place dégonflé.

### Technique antérieure

Il y a une recherche pour alléger les véhicules, on voit apparaitre les premiers véhicules, notamment des scooters, avec un châssis gonflable et des vitesses inférieures à 10km/h. Il y a aussi des brevets pour un véhicule factice gonflable et d'autres où seulement une partie de la structure est gonflable.

### Résumé de l'invention

Pour atteindre son but, l'invention propose les différentes solutions qui peuvent être utilisées séparément ou combinées partiellement ou toutes ensembles en fonction des avantages que l'on veut mettre en avant, notamment un véhicule gonflable pliable électrique solaire dont seul les châssis support de roue et la roue ne sont pas gonflables.

### Problème technique

Les véhicules sont lourds ce qui implique une consommation énergétique élevée ; de plus ils prennent de la place pour le transport et le stockage ; ensuite le moindre petit choc entraine des coûts importants de réparation ; enfin il n'est pas facile de changer le design de son véhicule.

### Solution technique

Toute la structure supérieure, c'est-à-dire tout ce qui est au-dessus du plancher ou du châssis, est gonflable et a au moins un habitacle gonflable, elle est fixée sur la plateforme basse et ladite structure est composée de poutres et de montants gonflables, des portes en tissu et/ ou une calandre en toile et/ou des côtés partiellement fermés par la carrosserie en tissu, qui permettent de partiellement fermer l'habitacle.

Les Sièges sont incorporés dans la structure supérieure pour diminuer l'encombrement et le coût.

Le plancher est gonflable, entièrement plat et commence à l'avant et fini à l'arrière du véhicule.

Un châssis plateforme gonflable composé de plusieurs éléments gonflables, assemblés entre eux, certains éléments gonflables ont une soupape de surpression avec des niveaux différents de déclenchement, afin de guider, en cas de chocs, la déformation par des éléments qui se dégonflent en premier, d'autres en suite et d'autres qui doivent garder la rigidité de l'habitacle. On peut utiliser ces éléments gonflables pour encadrer et maintenir la structure support moteur et ou la structure pour maintenir les roues.

Les commandes sont amovibles et peuvent être notamment une manette, un volant, des pédales ou un manche.

Le châssis support de roue est composé d'une forme solide comportant au moins un U qui est maintenue à la forme gonflable, tel un étau, par la pression de gonflage de ladite forme gonflable, on peut rajouter au moins une sécurité, pour assurer la mise en position et augmenter le maintien partiel ou permanent. Par exemple au moins un support d'axe, solidaire de la forme gonflable, qui est traversé par un axe, solidaire de la forme solide du châssis support de roue, ledit axe est orienté vers la roue de manière à ce que le montage et démontage de l'invention n'est possible que lorsque la forme gonflable est dégonflée.

Les éléments moteur(s), zones stockages de l'énergie, frein(s) pour faire fonctionner le véhicule sont dans les roues, lesdites roues ont aussi des clignotants et les câbles connectent toutes les roues entre elles.

Le garde-boue est un garde-boue réserve d'énergie et sert de garde-boue et de réserve d'énergie, il s'adapte sur toutes les roues du véhicule ; des connexions entre les différents garde-boues réserve d'énergie permettent de former une réserve d'énergie commune. On peut doubler le garde-boue réserve d'énergie pour augmenter la réserve commune.

Une partie de l'enveloppe du véhicule, composée de deux parois en tissu, peut changer de couleur. Les sources lumineuses peuvent être à l'intérieur des deux parois ou à l'extérieur contre les parois ou les deux.

Le freinage est réalisé à l'aide du ou des moteurs électriques, c'est est un système électrique qui utilise le freinage régénératif couplé à un freinage par injection de courant. On peut utiliser un frein mécanique pour immobiliser le véhicule à l'arrêt et en cas de coupure de courant, ledit frein peut être un frein à manque de courant. Le freinage par injection de courant peut être remplacé par le freinage par régénération et un dissipateur thermique de l'énergie générée pour gérer lorsque la batterie est pleine. On peut aussi ajouter une gestion de la réserve d'énergie à quatre niveaux : vide, bas, haut, pleine avec des actions de réduction ou consommation d'énergie.

Les panneaux solaires pliants recouvrent ou composent certaines parties de l'enveloppe ou de la structure gonflable du véhicule.

Lorsqu'on combine toutes les solutions présentées précédemment l'invention est un véhicule gonflable pliable électrique solaire qui est le plus léger possible et prendre le minimum de place dégonflé.

### Avantages apportés

Avantageusement, l'invention permet de réduire le poids et la consommation énergétique, des coûts de production bas, des réparations simples et de prendre moins de place pour son transport ou son stockage.

L'autre grand avantage de l'invention est la modularité, en effet comme le plancher gonflable est plat, cela permet de choisir où mettre le conducteur, les passagers, le coffre, la benne... Et pour un même plancher on peut avoir plusieurs designs.

Un autre bénéfice de l'invention est la sécurité. En effet comme il y a un ou plusieurs éléments gonflables avec des soupapes de surpression réglées à différentes pressions on peut maitriser la déformation du véhicule lors d'un choc, cela diminue les conséquences pour le véhicule et pour les personnes à l'intérieur.

Lorsque les commandes sont un manche avec des boutons de gestion cela permet d'être encore plus léger, de prendre moins de place, c'est facile à installer et surtout le véhicule est alors utilisable pour des personnes handicapées ou non.

Un autre bénéfice de l'invention est que le châssis support de roue permet de fixer une roue par le simple fait de la pression de gonflage, de la forme gonflable en elle-même, en plus avec cette solution on fixe des roues sur des formes de largeurs différentes. De plus si la pression de la forme gonflable à transporter est élevée on peut avoir un meilleur maintien et augmenter la vitesse de roulage.

Un autre bénéfice de l'invention est la possibilité de changer son véhicule à moindre coût. En effet en gardant les mêmes roues et support de roue, on peut mettre un plancher plus large ou une forme supérieure différente. Ainsi on pourra faire durer certaines pièces plus longtemps et aussi recycler plus facilement ; ce qui diminue l'impact écologique du véhicule tout en abaissant les coûts de changement de son véhicule.

L'invention permet aussi de configurer son véhicule en rajoutant des garde-boues réserve d'énergie, en effet ceux-ci se montent sur toutes les roues, ce qui permet d'augmenter l'autonomie du véhicule.

De plus l'invention permet de changer la couleur du véhicule au niveau de l'enveloppe du véhicule, qui peut être gonflable.

Au niveau de la sécurité, l'invention permet de supprimer l'influence des conditions atmosphériques en éliminant le contact mécanique des freins, tout en supprimant les bruits de freinage mécanique.

Et pour finir l'invention est en partie autonome grâce aux panneaux solaires.

### Brève description des dessins

Les détails de divers modes de réalisation de la présente invention, à la fois quant à leurs structure et fonctionnement, peuvent être extraits en partie par l'étude des dessins, dans lesquels les mêmes numéros de référence désignent des pièces identiques, et dans lesquels :
**Fig.1**

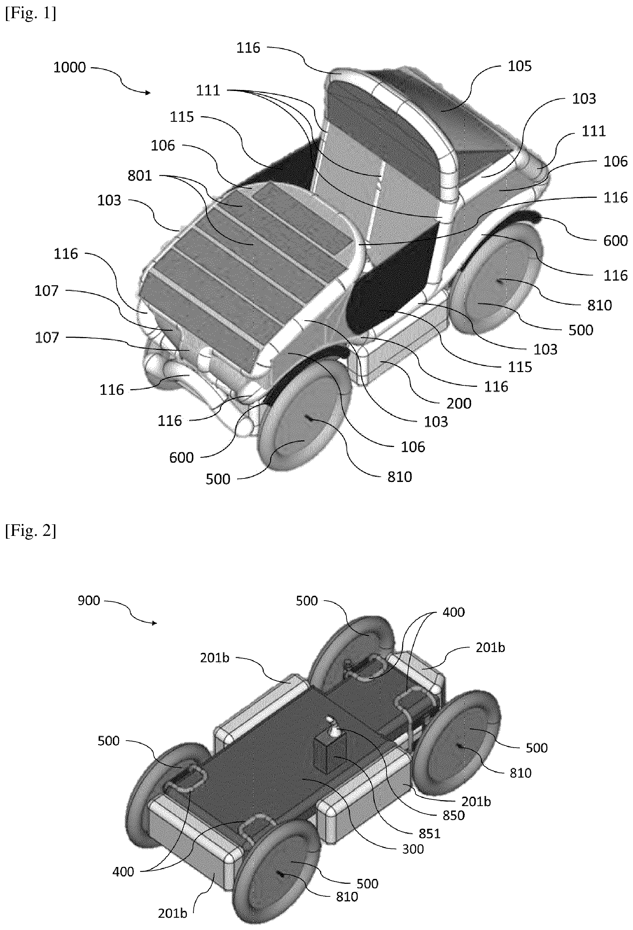

   [Fig.1] La [Fig.1] est une vue de trois-quarts avant de l'invention
**Fig.2**
   [Fig.2] La [Fig.2] est la vue de trois-quarts avant de la partie basse de l'invention
**Fig.3**

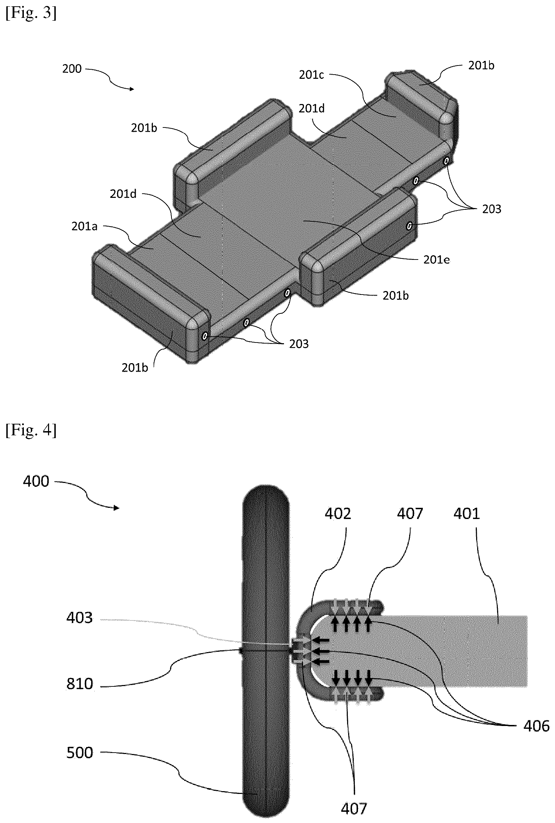

   [Fig.3] La [Fig.3] est la vue de trois-quarts avant du châssis de l'invention
**Fig.4**
   [Fig.4] La [Fig.4] est la vue en coupe de côté du châssis support de roue
**Fig.5**

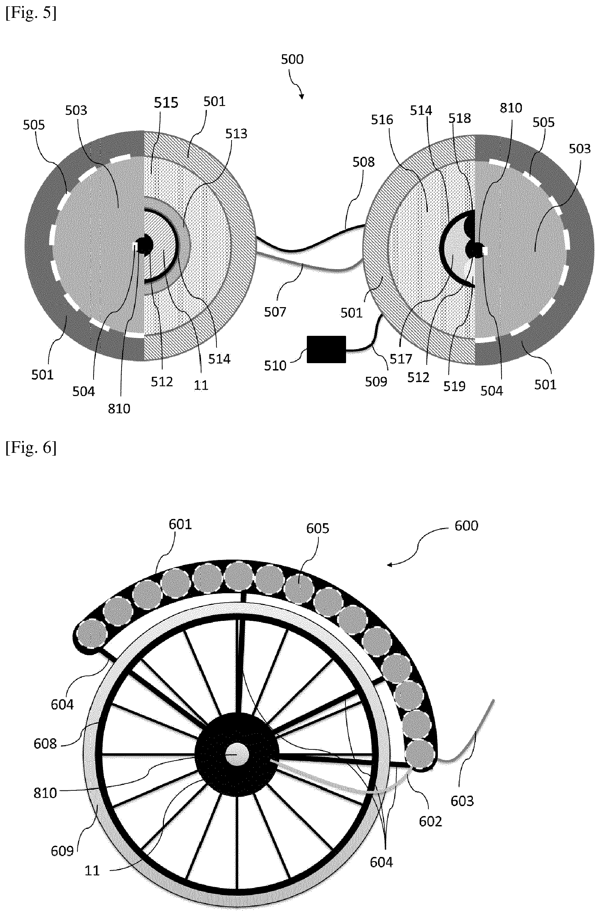

   [Fig.5] La [Fig.5] est la vue de côté en coupe partielle des moteurs roues et de leurs connections
**Fig.6**
   [Fig.6] La [Fig.6] est la vue de côté en coupe du garde-boue réserve d'énergie
**Fig.7**

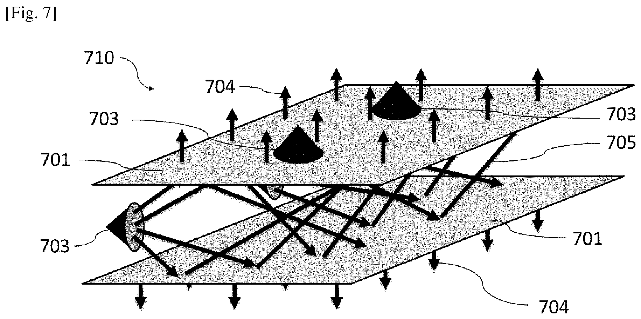

   [Fig.7] La [Fig.7] est la vue de trois-quarts du schéma de la structure lumineuse
**Fig.8**

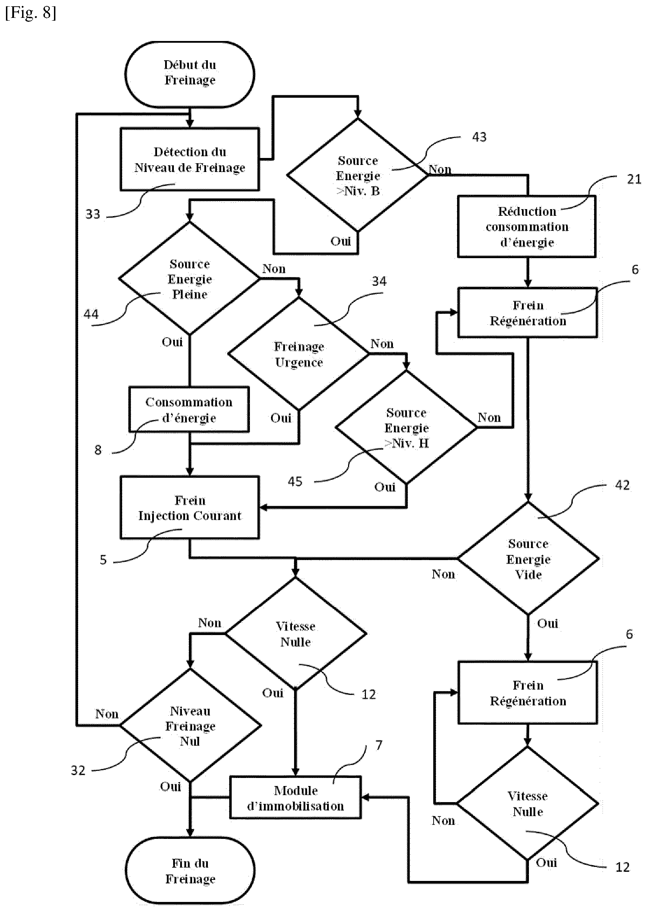

   [Fig.8] La [Fig.8] est l'organigramme de la solution de freinage d'un véhicule électrique
**Fig.9**

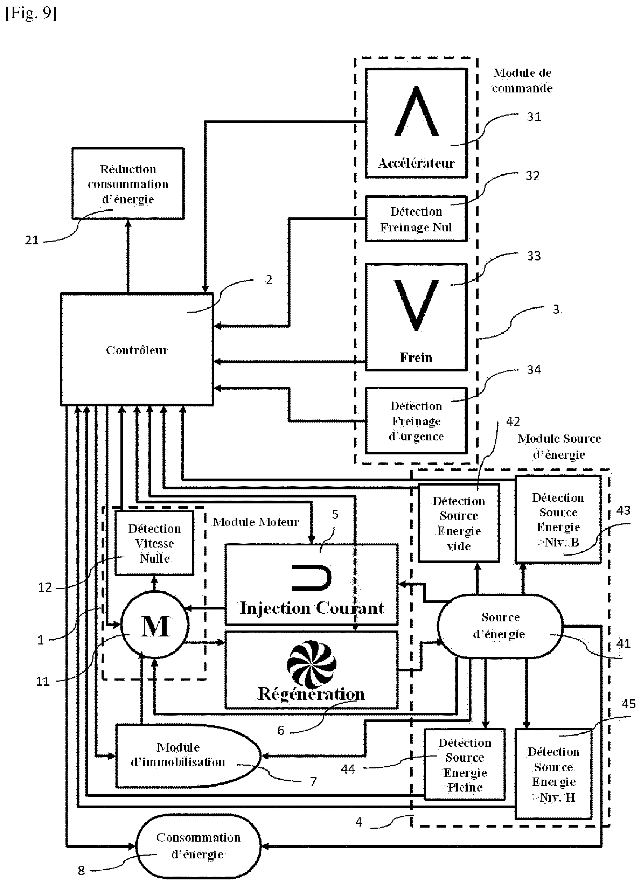

   [Fig.9] La [Fig.9] est le schéma de principe de la solution de freinage d'un véhicule électrique

### Description des modes de réalisation

Les formes gonflables ont une pression minimum et maximum.

Et/ou le véhicule comporte au moins : un moteur, un châssis, des roues, un plancher, un habitacle.

Et/ou le véhicule a toute la structure supérieure gonflable, c'est-à-dire tout ce qui est au-dessus du plancher ou du châssis, avec au moins un habitacle gonflable.

Et/ou le véhicule est électrique et gonflable.

Et/ou le véhicule électrique est à régénération de courant.

La [Fig.1] vue en perspective de trois-quarts avant de l'invention, illustre un véhicule (1000) ayant toute la structure supérieure gonflable, c'est-à-dire tout ce qui est au-dessus du plancher ou du châssis, composée d'au moins un habitacle gonflable fixé sur la plateforme basse (900), ladite structure comporte des poutres (103) et/ou des montants (111) et/ou les poutres (116) en forme d'arc de cercle, tous gonflables, reliés entre eux, des portes en tissu (115) et/ ou une calandre en toile (107) et/ou des côtés partiellement fermés par la carrosserie en tissu (106), qui permettent de partiellement fermer l'habitacle. Ladite structure supérieure gonflable est en partie recouverte ou composée de panneaux solaires (801).

La [Fig.2] vue de trois-quarts avant de la partie basse de l'invention illustre la partie inférieure (900) qui possède un plancher (300) gonflable, plat, allant de l'avant à l'arrière du véhicule posé sur un châssis plateforme gonflable (200) dont on voit les éléments de côtés (201b), le tout relié aux roues (500) par des châssis support de roue pour forme gonflable (400), ainsi que les commandes amovibles (850) et leur support (851), dans l'illustration les commandes amovibles (850) sont un manche avec des boutons dessus pour les lumières, les clignotants, le warning, le klaxon et la marche arrière.

La [Fig.3] vue de trois-quarts avant du châssis de l'invention, illustre un châssis plateforme gonflable (200) composé de plusieurs éléments gonflables (201), assemblés entre eux, dont certains ont une soupape de surpression (203) avec des niveaux différents de déclenchement, afin de guider, en cas de chocs, la déformation par des éléments qui se dégonflent en premier (201b), d'autres en suite (201c), (201a) et d'autres (201d), (201e) qui doivent garder la rigidité de l'habitacle.

La [Fig.4] vue en coupe de côté du châssis support de roue illustre ledit châssis support de roue pour forme gonflable (400) composé d'une forme solide comportant au moins un U (402), d'une forme gonflable (401) et d'un renfort (403), ledit renfort (403) permet la fixation de l'axe (810) de la roue (500), la forme solide (402) est maintenue à la forme gonflable (401), tel un étau, par la pression de gonflage (406) qui appuie la forme gonflable (401) sur la forme solide (402) et la pression réciproque (407) de la forme solide (402) sur la forme gonflable (401).

La [Fig.5] vue de côté en coupe partielle des moteurs roues et de leurs connections illustre, deux roues, au moins un moteur (11), une zone principale de stockage (516) et une zone secondaire de stockage (515) de l'énergie, un frein (512), un câble de transport de l'énergie (507) pour relier les roues entre elles et pour alimenter le(s) moteur(s) (11), un câble de gestion des données (508) pour communiquer avec les éléments des roues et gérer les moteurs des roues, une interface des commandes du véhicule (510), des axes de roues (810). Les éléments moteur(s) (11), zones stockages (516) (515) de l'énergie, frein(s) (512) pour faire fonctionner le véhicule sont dans les roues, lesdites roues ont aussi des clignotants (505) et les câbles (507) (508) connectent toutes les roues entre elles, un câble de commande (9) sort d'une des roues pour connecter l'interface des commandes (510).

La [Fig.6] vue de côté en coupe du garde-boue réserve d'énergie illustre une roue, au moins un moteur (11), des axes (810) de roues, un garde-boue réserve d'énergie (601). Le garde-boue réserve d'énergie (601) sert de garde-boue et de réserve d'énergie. Chaque garde-boue réserve d'énergie (601) étant solidaire avec le corps du véhicule, au niveau de l'axe (810) d'une roue, par l'intermédiaire de supports (604) ; le garde-boue réserve d'énergie (601) s'adapte sur toutes les roues du véhicule.

La [Fig.7] vue de trois-quarts du schéma de la structure lumineuse illustre une partie de l'enveloppe du véhicule, qui peut être gonflable, ladite partie comporte deux parois en tissu translucides (701), séparées l'une de l'autre, et une ou plusieurs sources lumineuses (703) près des parois (701), qui permettent une diffusion de la lumière (705) entre les deux parois (701) et un flux de lumière uniformisé (704) qui sort de l'enveloppe (710).

Les figures 8 et 9 respectivement l'organigramme et le schéma de principe, illustrent une solution de freinage d'un véhicule électrique, ayant un module moteur (1), un contrôleur (2), un module de commande (3), un module source d'énergie (4), le module moteur (1) a au moins un moteur (11) et un détecteur de vitesse nulle (12) dudit moteur (11), le module de commande (3) a au moins un accélérateur (31), un détecteur de freinage nul (32), un frein (33) et un détecteur de freinage d'urgence (34), le module source d'énergie (4) a au moins une source d'énergie (41), un détecteur source d'énergie vide (42), un détecteur source d'énergie >Niv. B (43), détection source énergie >Niv. H (45) et un détecteur de source d'énergie pleine (44), un module injection de courant (5), un module régénération (6), un module consommation d'énergie (8), module réduction consommation d'énergie (21), un module d'immobilisation (7), le freinage est réalisé à l'aide du ou des moteurs électriques (11), le freinage est un système électrique qui utilise le freinage régénératif (6) couplé à un freinage par injection de courant (5). Lorsque la source d'énergie est supérieure au Niv. H (45) on déclenche le module de consommation d'énergie (8), lorsqu'elle est inférieure au Niv. B (43) on déclenche le module réduction consommation d'énergie (21). On peut utiliser un frein mécanique pour immobiliser (7) le véhicule à l'arrêt et en cas de coupure de courant, cela peut-être un frein à manque de courant. Le freinage par injection de courant (5) peut être aussi remplacé par le freinage par régénération (6) et un dissipateur thermique de l'énergie générée pour gérer lorsque la batterie est pleine. L'organigramme, [Fig.8], permet de comprendre la logique de fonctionnement et le schéma de principes, [Fig.9], le lien entre les différents composants.

Le véhicule (1000) est véhicule gonflable pliable électrique solaire (1000), ayant tous le éléments des descriptions précédentes dont la structure supérieure gonflable est fixé sur la plateforme basse (900) qui contient au moins un châssis (400), les deux parois en tissu translucides (701) sont les deux demis tubes formant les poutres (103, 116) et les montants (111), la forme gonflable (401) est composé d'un châssis gonflable (200) et d'un plancher gonflable (300), le frein (512) est un système électrique qui utilise le freinage régénératif (6) couplé à un freinage par injection de courant (5), le garde-boue réserve d'énergie (601) est connecté au moteur (11) et au contrôleur (2), les panneaux solaires (801) sont connectées indirectement au moteur (11), les commandes amovibles

(850) et leur support (851) sont reliés à l'interface de commande (510).

### Application industrielle

L'invention est particulièrement destinée à fabriquer de nouveaux véhicules gonflables pliables avec un poids et une consommation énergétique réduite, ayant un faible coût de production, facilitant les réparations, tout en augmentant les possibilités de design.

### Documents brevets

FR2948577A3
GB2496443A - qui divulgue un véhicule selon le préambule de la revendication indépendante 1.
CN201193080Y
DE29719770U1
DE4239120A1
DE10200900558A1
DE102005034771A1
JP3443405B2
US2015291085A1
DE19529884A1
DE102019004710A1
CN201712528U
EP3549822A1
JP2015220026A
ZO2005025275A1
EP1316495A1
GB2552996A
AU2017100719A4
EP0180705A1
US8141888B1
FR1509071A
DE29719770U1
JPH02117419A
WO2007118193A2
US5692795A
WO2011121122A1
CN205675146U
US1144463A
US2015014080A1
CN106005225A
DE102018123206A1
WO2006074627A1
DE102008000146A1
DE102015225956A1
WO2006097499A2
AT522121B1
EP3832878A1
WO2013070153A1
EP3242120A1
FR3055277A1
WO02078192A1
DE102015114689A1
EP1503933A1
US2017305261A1
US2013069420A1
WO2016119022A1
US200943438A1
CN102795269A
GB2496443A

## Revendications

1. Véhicule comportant au moins un châssis (400), ledit châssis est composé au moins d'une forme en U (402) et d'une forme gonflable (401), le véhicule est **caractérisé en ce que** la forme en U (402) est maintenue à la forme gonflable (401) par la pression de gonflage (406) qui fait appuyer la forme gonflable (401) sur la forme en U (402).

2. Véhicule selon la revendication 1, **caractérisé en ce qu'**il possède une structure supérieure gonflable.

3. Véhicule selon la revendication 1, **caractérisé en ce qu'**il possède une enveloppe, ladite enveloppe comporte une partie avec deux parois translucides (701), séparées l'une de l'autre, et une ou plusieurs sources lumineuses (703) près des parois (701), qui permettent une diffusion de la lumière (705) entre les deux parois (701) et un flux de lumière uniformisé (704) qui sort de l'enveloppe (710).

4. Véhicule selon la revendication 1, **caractérisé en ce que** la forme gonflable (401) est un châssis plateforme gonflable (200) composé de plusieurs éléments gonflables (201), assemblés entre eux, certains éléments gonflables (201) ont une soupape de surpression (203) avec des niveaux différents de déclenchement, afin de guider, en cas de chocs, la déformation par des éléments qui se dégonflent en premier (201b), d'autres en suite (201c), (201a) et d'autres (201d), (201e) qui doivent garder la rigidité de l'habitacle.

5. Véhicule selon la revendication 1, **caractérisé en ce que** la forme gonflable (401) est un plancher (300) gonflable.

6. Véhicule selon la revendication 1, **caractérisé en ce qu'**il y a, pour faire fonctionner le véhicule, dans au moins une roue (500) reliée au châssis (400) : au moins un élément moteur (11), au moins une zone de stockage (516) / (515) de l'énergie et au moins un frein (512).

7. Véhicule selon la revendication 1, **caractérisé en ce que** le véhicule possède au moins un moteur (11) et que le freinage est réalisé à l'aide du ou des moteurs (11).

8. Véhicule selon la revendication 1, **caractérisé en ce qu'**il a un frein à manque de courant.

9. Véhicule selon la revendication 1, **caractérisé en ce qu'**il est un véhicule (1000) qu'il possède au moins un moteur (11), au moins une zone de stockage (516) / (515) de l'énergie, au moins un frein (512) et au moins une structure supérieure qui est fixée sur une plateforme basse (900), ladite plateforme basse inclus au moins un châssis (400), Il y a aussi des commandes (850) et leur support (851) qui sont reliés à une interface de commande (510).

10. Véhicule selon la revendication 1, **caractérisé en ce qu'**il peut être, en partie, recouvert de panneaux solaires (801).

11. Véhicule selon la revendication 1, **caractérisé en ce que** le véhicule possède au moins un garde-boue réserve d'énergie (601).

## Patentansprüche

1. Fahrzeug mit mindestens einem Rahmen (400), wobei dieser Rahmen mindestens eine U-Form (402) und eine aufblasbare Form (401) umfasst, **dadurch gekennzeichnet, dass** die U-Form (402) durch den Aufblasdruck (406) der aufblasbaren Form (401) gehalten wird, die die U-Form (402) gegen sich selbst presst.

2. Fahrzeug nach Anspruch 1, **dadurch gekennzeichnet, dass** es eine aufblasbare obere Struktur umfasst.

3. Fahrzeug nach Anspruch 1, **dadurch gekennzeichnet, dass** es eine Hülle aufweist, wobei diese Hülle einen Abschnitt mit zwei transluzenten Wänden (701) umfasst, die voneinander getrennt sind, sowie eine oder mehrere Lichtquellen (703) in der Nähe der Wände (701), wodurch eine Lichtstreuung (705) zwischen den beiden Wänden (701) und ein gleichmäßiger Lichtfluss (704) aus der Hülle (710) ermöglicht wird.

4. Das Fahrzeug nach Anspruch 1, **dadurch gekennzeichnet, dass** die aufblasbare Form (401) ein aufblasbarer Plattformrahmen (200) ist, der aus mehreren zusammengebauten aufblasbaren Elementen (201) besteht, wobei einige dieser aufblasbaren Elemente (201) über ein Druckablassventil (203) mit unterschiedlichen Auslösedrücken verfügen, um im Falle von Stößen die Verformung gezielt zu steuern, die Elemente, die zuerst entleert werden, sind (201b), gefolgt von weiteren in der Reihenfolge (201c), (201a) und schließlich den Elementen (201d), (201e), die die Steifigkeit des Passagierabteils aufrechterhalten müssen.

5. Fahrzeug nach Anspruch 1, **dadurch gekennzeichnet, dass** die aufblasbare Form (401) ein aufblasbarer Boden (300) ist.

6. Fahrzeug nach Anspruch 1, **dadurch gekennzeichnet, dass** es mindestens ein Rad (500) umfasst, das mit dem Fahrgestell (400) verbunden ist und mindestens ein Motorelement (11), mindestens einen Energiespeicherbereich (516)/(515) und mindestens eine Bremse (512) enthält.

7. Fahrzeug nach Anspruch 1, **dadurch gekennzeichnet, dass** es mindestens einen Motor (11) aufweist und das Bremsen über die Motoren (11) erfolgt.

8. Fahrzeug nach Anspruch 1, **dadurch gekennzeichnet, dass** es eine Bremse mit Stromausfall-Sicherung aufweist.

9. Fahrzeug nach Anspruch 1, **dadurch gekennzeichnet, dass** es ein Fahrzeug (1000) ist, das mindestens einen Motor (11), mindestens einen Energiespeicherbereich (516)/(515), mindestens eine Bremse (512) und eine auf einer niedrigen Plattform (900) befestigte obere Struktur umfasst, wobei diese niedrige Plattform mindestens ein Fahrgestell (400) enthält und zudem Bedienelemente (850) und deren Halterung (851) vorhanden sind, die mit einer Steuerungsschnittstelle (510) verbunden sind.

10. Fahrzeug nach Anspruch 1, **dadurch gekennzeichnet, dass** es teilweise mit Solarpaneelen (801) bedeckt sein kann.

11. Fahrzeug nach Anspruch 1, **dadurch gekennzeichnet, dass** es mindestens einen Energie-Reservekotflügel (601) umfasst.

## Claims

1. A vehicle comprising at least one frame (400), this frame is composed at least of a U-shape (402) and an inflatable shape (401), the vehicle is **characterized in that** the U-shape (402) is held in the inflatable shape (401) by the inflation pressure (406) which presses the inflatable shape (401) onto the U-shape (402).

2. A vehicle according to claim 1, **characterized in that** it has an inflatable upper structure.

3. The vehicle according to claim 1, **characterized in that** it has an envelope, said envelope comprises a portion with two translucent walls (701), separated from each other, and one or more light sources (703) near the walls (701), which allow a diffusion of the light (705) between the two walls (701) and a uniform light flux (704) which exits the envelope (710).

4. The vehicle according to claim 1, **characterized in that** the inflatable shape (401) is an inflatable platform frame (200) composed of several inflatable elements (201), assembled together, some inflatable elements (201) have a pressure relief valve (203) with different levels of triggering, in order to guide, in the event of shocks, the deformation by elements which deflate first (201b), other in succession (201c), (201a) and others (201d), (201e) which must keep the rigidity of the passenger compartment.

5. The vehicle according to claim 1, **characterized in that** the inflatable shape (401) is an inflatable floor (300).

6. Vehicle according to Claim 1, **characterized in that**, in order to operate the vehicle, in at least one wheel (500) connected to the chassis (400): at least one motor element (11), at least one energy storage area (516)/(515) and at least one brake (512).

7. Vehicle according to Claim 1, **characterized in that** the vehicle has at least one motor (11) and that the braking is carried out by means of the motor (s) (11).

8. Vehicle according to Claim 1, **characterized in that** it has a power failure brake.

9. The vehicle according to claim 1, **characterized in that** it is a vehicle (1000) that it has at least one motor (11), at least one energy storage area (516)/(515), at least one brake (512) and at least one upper structure which is fixed on a low platform (900), this low platform including at least one chassis (400), there are also controls (850) and their support (851) which are connected to a control interface (510).

10. Vehicle according to Claim 1, **characterized in that** it may be, in part, covered with solar panels (801).

11. Vehicle according to Claim 1, **characterized in that** the vehicle has at least one energy reserve mudguard (601).
